# EUROPÄISCHE PATENTANMELDUNG

(11) **EP 2 053 550 A1**
(43) Veröffentlichungstag der Anmeldung: **29.04.2009**
(21) Anmeldenummer: 07119203.3
(22) Anmeldetag: 24.10.2007
(51) Int. Cl.: G06Q 10/00, B65G 1/00, B65G 1/137

(54) **Verfahren zum Bereitstellen und Lagern von Arzneimittelabgabepackungen**

(71) Anmelder: Rowa Automatisierungssysteme GmbH, 53539 Kelberg (DE)
(72) Erfinder: Wagner, Rolf, 53539 Kelberg (DE)
(74) Vertreter: Schmidt, Frank-Michael

(57) **Zusammenfassung**

Die Anmeldung beschreibt ein Verfahren zum Bereitstellen und Lagern von Arzneimittelabgabepackungen, die mehrere unterschiedliche Arzneimittelportionen in einer vorgegebenen Anordnung enthalten. Das Verfahrens bedient sich dabei eines von einem Computer gesteuerten automatisierten Arzneimittellagers und eines von dem Computer gesteuerten Bediengeräts zur Ein- und Auslagerung von Arzneimittelpackungen. Dazu wird an einem Bediener-Arbeitsplatz eine zu befüllende Verpackung mit mehreren Aufnahmekammern bereitgestellt. Der Bediener wird von einer mit dem Computer gekoppelten Ausgabeeinrichtung angewiesen, eine vorgegebene Anzahl von Arzneimittelportionen aus der herantransportierten Arzneimittelpackung zu entnehmen und in eine vorgegebene Aufnahmekammer einzulegen, wobei dem Bediener von einer mit dem Computer gekoppelten Ausgabeeinrichtung jeweils ein ldentifikationssignal für die zu befüllende Aufnahmekammer angezeigt wird. Danach wird die Arzneimittelpackung von dem Bediengerät wieder in das Arzneimittellager einlagert.

## Beschreibung

Die Erfindung betrifft ein Verfahren zum Bereitstellen und Lagern von Arzneimittelabgabepackungen, die mehrere unterschiedliche Arzneimittelportionen in einer vorgegebenen Anordnung enthalten, mit Hilfe eines von einem Computer gesteuerten automatisierten Arzneimittellagers.

Arzneimittel werden von Apotheken grundsätzlich in zwei verschiedenen Arten von Packungen ausgegeben. Einerseits werden Arzneimittelpackungen, die jeweils eine Mehrzahl gleichartiger Arzneimittelportionen enthalten, wie beispielsweise mehrere Tabletten oder Zäpfchen enthaltende Blister oder Flaschen, an Patienten oder andere Kunden, der Apotheke ausgegeben, wobei der Patient oder dessen Betreuer selbst für die richtige Entnahme und Dosierung einzelner Arzneimittelportionen aus den Arzneimittelpackungen verantwortlich ist. Regelmäßig erhält er dazu Hinweise von einem Apotheker. Eine zweite Form der Abgabe von Arzneimitteln wird hier als "Arzneimittelabgabepackungen" bezeichnet. Die Arzneimittelabgabepackungen enthalten mehrere Aufnahmekammern, in denen jeweils eine oder mehrere Arzneimittelportionen eingefüllt sind, wobei jeder Aufnahmekammer eine Kennzeichnung, beispielsweise ein Einnahmezeitpunkt oder - sofern die Arzneimittelabgabepackung für mehr als einen Patienten vorgesehen sein sollte - eine Patienten-Identifikation, zugeordnet ist. Jede Aufnahmekammer kann mehrere unterschiedliche Arzneimittelportionen enthalten; es ist aber auch denkbar, dass für jede einzelne Arzneimittelportion genau eine Kammer vorgesehen ist, wobei beispielsweise mehrere Kammern demselben Einnahmezeitpunkt zugeordnet sind. Darüber hinaus können die Arzneimittelportionen auch so auf die Kammern aufgeteilt sein, dass jede Kammer nur gleichartige Arzneimittelportionen enthält, wobei die Kammern verschiedenartige Arzneimittelportionen enthalten können. Derartige Arzneimittelabgabepackungen haben beispielsweise die Form von Blistern, wobei die einzelnen Kammern zwischen zwei verschweißten Folien gebildet sind. Die Arzneimittelabgabepackungen können aber auch aus einer Anordnung miteinander verbundener Becher oder einer bestimmten Anordnung aneinander gehefteter Medikamententütchen gebildet sein.

Derartige Arzneimittelabgabepackungen werden gegenwärtig häufig manuell hergestellt, indem ein Bediener (beispielsweise das Personal in einer Apotheke, einem Krankenhaus oder einem Pflegeheim) zunächst eine Reihe von herkömmlichen Arzneimittelpackungen zu einem Arbeitsplatz transportiert, dort zu befüllende Leer-Verpackungen mit jeweils mehreren Aufnahmekammern bereitstellt und dann aus den einzelnen Arzneimittelpackungen jeweils die erforderliche Anzahl von Arzneimittelportionen entnimmt und in die jeweils richtigen Aufnahmekammern der zu befüllenden Verpackungen einfüllt. Anschließend wird die befüllte Arzneimittelabgabepackung verschlossen. Bei diesem manuellen Herstellungsverfahren können Fehler auftreten, beispielsweise können einzelne Arzneimittelportionen in die falschen Kammern eingefüllt werden oder es kann der Fall eintreten, dass eine zu hohe Anzahl von Arzneimittelportionen aus einer Arzneimittelpackung entnommen wird und die überschüssigen Arzneimittelportionen anschließend versehentlich nicht in diese Arzneimittelpackungen sondern eine andere ebenfalls auf dem Arbeitsplatz bereitstehende Arzneimittelpackung mit einer anderen Art von Arzneimitteln zurückgefüllt wird. Eine Aufgabe der Erfindung ist es daher, derartige Bedienerfehler zu minimieren.

Im Bereich der Lagerung von Arzneimittelpackungen sind moderne Lagerhaltungssysteme bekannt, wie sie beispielsweise in der DE 195 09 951 C2 oder der EP 0 620 528 B1 beschrieben sind. Diese Lagerautomaten gestatten eine automatische Lagerung und Verwaltung einer Vielzahl von Arzneimittelpackungen mit unterschiedlichsten Arzneimitteln.

Darüber hinaus gibt es zur Herstellung der eingangs genannten Arzneimittelabgabepackungen vollautomatische Dispensiersysteme, bei denen jeweils eine Vielzahl gleichartiger Arzneimittelportionen in speziellen Kassetten gelagert werden, wobei die Kassetten integrierte Abgabeeinrichtungen zur Abgabe einzelner Arzneimittelportionen enthalten. In einer Dispensiervorrichtung werden aus den Kassetten die einzelnen Arzneimittelportionen in gewünschter Reihenfolge entnommen und automatisch in Arzneimittelabgabepackungen, beispielsweise Blister, eingefüllt.

Aufgabe der Erfindung ist es daher, die oben genannten Fehler der manuellen Herstellung zu minimieren, ohne spezielle teure Dispensierautomaten einsetzen zu müssen.

Diese Aufgabe wird erfindungsgemäß durch ein Verfahren mit den Merkmalen des Patentanspruchs 1 gelöst. Bei dem erfindungsgemäßen Verfahren zum Bereitstellen und Lagern von Arzneimittelabgabepackungen, die mehrere unterschiedliche Arzneimittelportionen in einer vorgegebenen Anordnung enthalten, mit Hilfe eines von einem Computer gesteuerten automatisierten Arzneimittellagers mit einer Vielzahl von Lagerplätzen für Arzneimittelpackungen und einem von dem Computer gesteuerten Bediengerät zur Ein- und Auslagerung von Arzneimittelpackungen wird zunächst (a) an einem Bediener-Arbeitsplatz eine mit den Arzneimittelportionen zu befüllende Verpackung mit mehreren Aufnahmekammern bereitgestellt. Hierbei handelt es sich beispielsweise um eine aus einer Kunststofffolie bestehende Verpackung mit mehreren Vertiefungen. Anschließend wird (b) für jede Art von in die Verpackung einzufüllenden Arzneimittelportionen (b1) eine Arzneimittelpackung, die ausschließlich der jeweiligen Art entsprechende Arzneimittelportionen enthält, zu dem Bediener-Arbeitsplatz herantransportiert. Die Arzneimittelpackung wird von dem Bediengerät aus dem Arzneimittellager ausgelagert, sofern sie darin vorrätig ist. Dann wird (b2) der Bediener von einer mit dem Computer gekoppelten Ausgabeeinrichtung angewiesen, eine vorgegebene Anzahl von Arzneimittelportionen aus der herantransportierten Arzneimittelpackung zu entnehmen und in eine vorgegebene Aufnahmekammer oder nacheinander in mehrere vorgegebene Aufnahmekammern einzulegen. Dabei wird dem Bediener von einer mit dem Computer gekoppelten Ausgabeeinrichtung jeweils ein Identifikationssignal für die zu befüllende Aufnahmekammer angezeigt. Das Identifikationssignal kann beispielsweise ein optisches oder akustisches Signal sein. Dann wird (b3) dem Computer von dem Bediener der Abschluss des Einlegens der aus der herantransportierten Arzneimittelpackung entnommenen Art von Arzneimittelportionen mittels einer Eingabeeinrichtung angezeigt. Schließlich wird (b4) die Arzneimittelpackung von dem Bediengerät wieder in das Arzneimittellager eingelagert, sofern noch wenigstens eine Arzneimittelportion darin enthalten ist.

Für jede Art von Arzneimittelportionen werden die Schritte (b1), (b2), (b3) und (b4) in dieser Reihenfolge ausgeführt. Der Schritt (b1) wird für eine weitere Art von in die Verpakkung einzufüllenden Arzneimittelportionen erst nach dem Schritt (b3) für die vorher eingefüllte Art von Arzneimittelportionen abgeschlossen. Das heißt, der Schritt (b1) des Herantransportierens einer nachfolgenden Arzneimittelportion kann zwar von dem Schritt (b3) des Anzeigens des Abschlusses des Einlegens durch den Bediener begonnen werden; abgeschlossen wird er jedoch erst, nachdem der Bediener den Abschluss des Einlegens der vorhergehenden Art von Arzneimittelportionen mittels einer Eingabeeinrichtung dem Computer angezeigt hat. Nachdem die Schritte (b1) bis (b3) für jede Art einzufüllender Arzneimittelportionen abgeschlossen sind, wird (c) die befüllte Arzneimittelabgabepackung verschlossen und mit Hilfe des Bediengeräts in das Arzneimittellager eingelagert, sofern die Arzneimittelabgabepackung noch nicht sogleich ausgegeben werden soll.

Das erfindungsgemäße Verfahren stellt eine Art der manuellen Herstellung der Arzneimittelabgabepackungen (so genannte "manuelle Verblisterung") dar, bei der der Bediener von einem computergesteuerten automatisierten Arzneimittellager unterstützt wird. Der computergestützte Arzneimittellagerautomat übernimmt die logistische Steuerung, so dass bei der sequenziellen Abarbeitung die o. g. üblichen Fehler der rein manuellen Herstellung vermindert oder vermieden werden. Der Lagerautomat sorgt dafür, dass die richtigen Arzneimittelpackungen in der richtigen Reihenfolge herantransportiert werden, gibt dem Bediener klare und eindeutige Anweisungen, wie viel Arzneimittelportionen jeweils zu entnehmen sind und zeigt mittels des Identifikationssignals jeweils die zu befüllende(n) Aufnahmekammer(n) an. Außerdem lagert der Lagerautomat nicht nur die herantransportierten und anschließend ggf. wieder eingelagerten Arzneimittelpackungen; er kann auch die hergestellten Arzneimittelabgabepackungen lagern.

Bei einer bevorzugten Ausführungsform des erfindungsgemäßen Verfahrens werden die Arzneimittelpackungen und die nach dem Befüllen eingelagerten Arzneimittelabgabepackungen in dem Arzneimittellager chaotisch und gemischt gelagert. Dies dient einer flächen- oder raumoptimalen Lagerung.

In dem Schritt (b1), in dem eine Arzneimittelpackung, die ausschließlich der jeweiligen Art entsprechende Arzneimittelportionen enthält, zu dem Bediener-Arbeitsplatz herantransportiert wird, wird diese Arzneimittelpackung von dem Bediengerät aus dem Arzneimittellager ausgelagert, sofern sie dort vorrätig ist. Wenn sie dagegen nicht im Arzneimittellager vorrätig ist, wird bei einer bevorzugten Weiterbildung des Verfahrens der Bediener aufgefordert, die Arzneimittelpackung heranzutransportieren, beispielsweise aus einem nicht-automatisierten herkömmlichen Arzneimittellager (zum Beispiel Schrank) zu holen. Sofern die Arzneimittelpackung, die der Bediener herangeholt hat, grundsätzlich in das automatisierte Arzneimittellager einlagerungsfähig ist, kann der Bediener diese Packung nach der Entnahme der gewünschten Arzneimittelportionen in den Lagerautomaten einlagern. Wenn die Arzneimittelpackung dagegen nicht in das automatisierte Arzneimittellager eingelagert werden kann, so wird der Bediener nach dem Abschluss der Entnahme der Arzneimittelportionen aufgefordert, diese Packung wieder zu dem nicht-automatisierten Lager zurück zu transportieren (sofern noch wenigstens eine Arzneimittelportion in der Pakkung enthalten ist).

Bei einer Ausführungsform wird als Identifikationssignal für die zu befüllende Aufnahmekammer eine die jeweilige Aufnahmekammer kennzeichnende akustische und/oder optische Anzeige ausgegeben. Beispielsweise wird hierfür eine zu befüllende Verpackung verwendet, bei der die Aufnahmekammern jeweils eindeutige Kennzeichnungen, beispielsweise Nummerierungen (zum Beispiel Spalten-Ziffern und Zeilen-Buchstaben), aufweisen. Der Computer zeigt dann jeweils, beispielsweise auf einem Bildschirm oder über akustische Ausgaben, die Kennzeichnungen derjenigen Aufnahmekammern an, in die jeweils einzufüllen ist.

Bei einer anderen Ausführungsform des erfindungsgemäßen Verfahrens wird an dem Bediener-Arbeitsplatz eine Verpackung mit mehreren nebeneinander angeordneten Aufnahmekammern in einer vorgegeben räumlichen Orientierung bereitgestellt und gehalten. Dies hat den Vorteil, dass die Steuerung des Computers Kenntnis darüber hat, an welchem Ort sich welche Aufnahmekammer befindet. Ausgehend hiervon ist eine bevorzugte Ausführungsform dadurch gekennzeichnet, dass als Identifikationssignal eine der jeweiligen Aufnahmekammer räumlich zugeordnet optische Anzeige ausgegeben wird. Beispielsweise befindet sich die Verpackung mit mehreren nebeneinander angeordneten Aufnahmekammern an einem vorgegeben Platz auf einem ebenen Tisch und ein oberhalb des Tischs montierter Laser-Pointer wird so gesteuert, dass er auf die jeweils zu befüllende Aufnahmekammer zeigt, das heißt dort einen für den Bediener sichtbaren Leuchtfleck erzeugt. Es ist aber auch denkbar, dass auf einem Bildschirm ein Abbild der gesamten Verpackung mit den nebeneinander angeordneten Aufnahmekammern erzeugt wird, wobei dann als Identifikationssignal auf dem Bildschirm die jeweils zu befüllende Aufnahmekammer optisch hervorgehoben wird.

Bei einer alternativen Ausführungsform wird als Identifikationssignal eine die jeweilige Aufnahmekammer selbst optisch hervorhebende Anzeige ausgegeben. Beispielsweise ist diese Anzeige eine unter oder neben der jeweiligen Aufnahmekammer angeordnete optische Anzeige, beispielsweise eine unter oder neben der Kammer angeordnete LED. Die zur Ausführung des erfindungsgemäßen Verfahrens verwendete Vorrichtung, insbesondere der Bediener-Arbeitsplatz dieser Vorrichtung, ist an die jeweilige Art der verwendeten Identifikationssignale angepasst. Die Vorrichtung weist beispielsweise eine an die Form der Verpackung mit den zu befüllenden Aufnahmekammern angepasste Auflage mit zugeordneten optischen Anzeigen auf.

Der Schritt (b4) des Wiedereinlagerns der Arzneimittelpakkung, aus der die Arzneimittelportionen bereits entnommen worden sind, kann für jede Art von Arzneimittelportionen ausgeführt werden, bevor der Schritt (b1) des Herantransportierens einer Arzneimittelpackung für eine nächste Art von Arzneimittelportionen ausgeführt wird. Der Schritt (b4) des Wiedereinlagerns kann aber auch unabhängig von den Schritten des Herantransportierens der nachfolgenden Arzneimittelpackungen und vor oder nach dem Schritt (c) des Ausgebens oder Einlagerns der Arzneimittelabgabepackung ausgeführt werden. Bei einer Ausführungsform kann der Schritt (b1) des Herantransportierens einer nachfolgenden Arzneimittelpackung für eine weitere Art von in die Verpackung einzufüllenden Arzneimittelportionen bereits begonnen werden, bevor von dem Bediener der Abschluss des Einlegens der aus der vorhergehenden Arzneimittelpackung entnommenen Art von Arzneimittelportionen dem Computer angezeigt wird (Schritt b3). Beispielsweise kann der Schritt (b1) des Herantransportierens einer nachfolgenden Arzneimittelpakkung bereits begonnen werden, indem die nachfolgende Arzneimittelpackung zu einem Entnahmefach an dem Bediener-Arbeitsplatz herantransportiert wird. Der Schritt (b1) des Herantransportierens der nachfolgenden Arzneimittelpackung wird dennoch erst nach dem Schritt (b3) des Anzeigens des Abschlusses des Einlegens durch den Bediener für die vorhergehende Art von Arzneimittelportionen abgeschlossen, indem dann erst der Zugriff auf das Entnahmefach freigegeben wird. Dies sichert die erfindungsgemäße Fehlerminimierung.

Vorteilhafte und/oder bevorzugte Weiterbildungen der Erfindung sind in den Unteransprüchen gekennzeichnet. Im Folgenden wird die Erfindung anhand eines in der Zeichnung dargestellten bevorzugten Ausführungsbeispiels näher erläutert. In der Zeichnung zeigen:

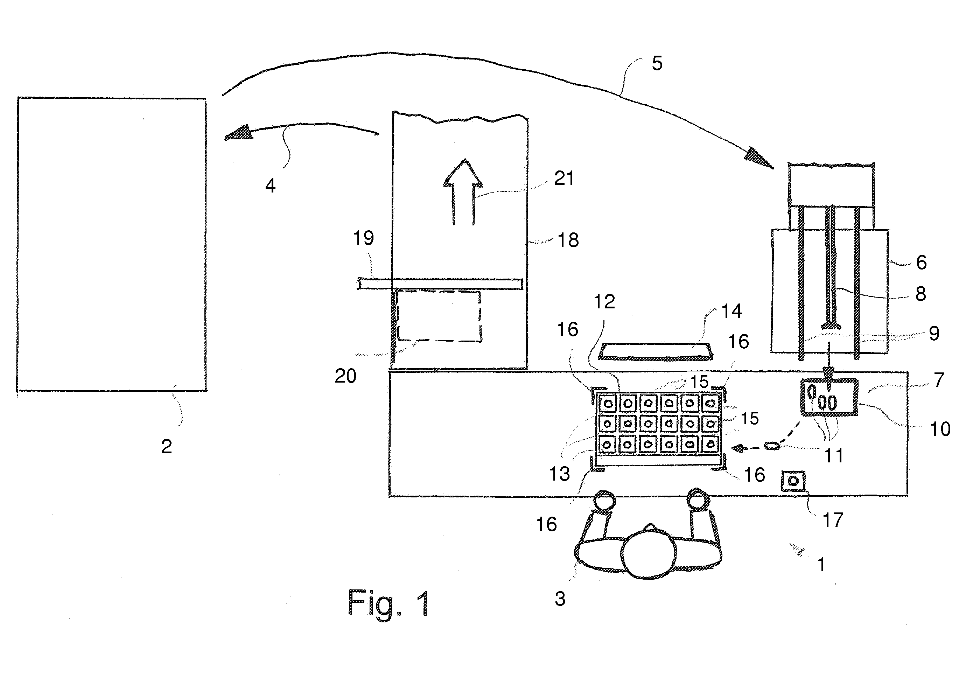

Figur 1 eine schematische Darstellung einer Anordnung mit einem Bediener-Arbeitsplatz und einem automatisierten Arzneimittellager zur Ausführung des erfindungsgemäßen Verfahrens.

Figur 1 zeigt eine schematische Darstellung mit einem Bediener-Arbeitsplatz (1) und einem automatisierten Arzneimittellager 2. Ein Bediener 3 wird von der in Figur 1 gezeigten Anordnung bei der Herstellung von Arzneimittelabgabepackungen unterstützt. Die Arzneimittelabgabepackungen, nachfolgend auch Blister genannt, weisen mehrere Aufnahmekammern auf, in denen mehrere unterschiedliche Arzneimittelportionen in einer vorgegebenen Anordnung enthalten sind. Das von einem Computer gesteuerte automatisierte Arzneimittellager 2 lagert einerseits Arzneimittelpackungen, die jeweils eine Vielzahl gleichartiger Arzneimittelportionen, beispielsweise Tabletten oder Kapseln, enthalten. Andererseits können in dem automatisierten Arzneimittellager 2 auch Arzneimittelabgabepackungen, dass heißt Blister, gelagert werden, die jeweils in einer vorgegebenen Anordnung unterschiedliche Arzneimittelportionen enthalten können. Das von einem Computer gesteuerte automatisierte Arzneimittellager 2 umfasst Regallager und/oder Schachtlager, die eine Vielzahl von Lagerplätzen für Arzneimittelpackungen bereitstellen. Darüber hinaus enthält das automatisierte Arzneimittellager wenigstens ein von dem Computer gesteuertes Bediengerät zur Ein- und Auslagerung von Arzneimittelpackungen. Neben dem Bediengerät sind gegebenenfalls noch weitere Transportvorrichtungen vorgesehen, die Arzneimittelpackungen aus dem Arzneimittellager 2 auslagern und zu dem Bediener-Arbeitsplatz 1 transportieren können oder die umgekehrt von dem Bediener-Arbeitsplatz 1 zu dem Arzneimittellager 2 Arzneimittelpackungen oder Arzneimittelabgabepackungen (zum Beispiel Blister), die so gestaltet sind, dass sie von einem computergesteuerten Bediengerät gehandhabt werden können, transportieren können. Der Transport von Arzneimittelpackungen oder Blistern von dem Bediener-Arbeitsplatz 1 zu dem Arzneimittellager 2 ist durch den Pfeil 4 und der umgekehrte Transport zu dem Bediener-Arbeitsplatz durch den Pfeil 5 schematisch angedeutet. Beispielsweise kann ein automatisiertes Arzneimittellager mit ebenen Regalböden oder geneigten Schächten unmittelbar hinter oder neben dem Bediener-Arbeitsplatz 1 angeordnet sein, so dass ein Greifer 6 eines Bediengeräts nicht nur zur Ein-, Ausund Umlagerung von Arzneimittelpackungen innerhalb des Arzneimittellagers 2 dienen kann, sondern auch ausgelagerte Arzneimittelpackungen an einer vorgegebenen Stelle 7 des Bediener-Arbeitsplatzes 1 ablegen kann. Der in Figur 1 schematisch dargestellte Greifer 6 eines Bediengeräts enthält beispielsweise einen Sauggreifer 8 und/oder Führungs- oder Greifbacken 9 zum Halten und horizontalen Verschieben von Arzneimittelpackungen, wie beispielsweise der an der Stelle 7 dargestellten Packung 10.

Die an der vorgegebenen Stelle 7 abgelegte Arzneimittelpackung 10 enthält eine Mehrzahl gleichartiger Arzneimittelportionen, beispielsweise die schematisch dargestellten Arzneimittelkapseln 11. Einzelne Arzneimittelportionen, beispielsweise einzelne Arzneimittelkapseln 11, werden von dem Bediener 3 der Arzneimittelpackung 10 entnommen und in vorgegebene Aufnahmekammern 13 einer auf dem Bediener-Arbeitsplatz 1 in einer vorgegebenen Orientierung aufliegenden Verpackung 12 eingefüllt. Die Verpackung 12 enthält mehrere Aufnahmekammern 13. Bei dem in Figur 1 dargestellten Beispiel enthält die Verpackung 12 insgesamt 18 Aufnahmekammern 13, die in drei Zeilen zu jeweils sechs Kammern angeordnet sind. Bei dem in Figur 1 dargestellten Beispiel sind die Kammern 13 in einer vorgegebenen Orientierung nebeneinander angeordnet. Zusätzlich kann jede Kammer mit einer (nicht dargestellten) Kennzeichnung versehen sein.

An dem Bediener-Arbeitsplatz 1 ist eine mit dem Computer gekoppelte Ausgabeeinrichtung 14, beispielsweise ein Bildschirm und eine Audioausgabeeinrichtung (Lautsprecher), angeordnet. Über diese Ausgabeeinrichtung 14 erteilt der Computer dem Bediener 3 Weisungen, wann er wie viele Arzneimittelportionen 11 der Arzneimittelpackung 10 entnehmen und in vorgegebene Aufnahmekammern 13 der Verpackung 12 einfüllen soll.

Damit der Bediener 3 stets die richtige Aufnahmekammer 13 mit einer aus der Arzneimittelpackung 10 entnommenen Arzneimittelportion 11 befüllt, ist der Computer mit einer Ausgabeeinrichtung gekoppelt, über die ein Identifikationssignal für die zu befüllende Aufnahmekammer 13 angezeigt wird. Dabei ist es denkbar, dass hierfür die Ausgabeeinrichtung 14 verwendet wird, die dem Bediener 3 eine Kennzeichnung der zu befüllenden Kammer, beispielsweise Koordinaten, optisch anzeigt oder akustisch ausgibt. Bei dem in Figur 1 gezeigten Ausführungsbeispiel umfasst die Ausgabeeinrichtung zur Ausgabe des Identifikationssignals für die zu befüllende Aufnahmekammer eine Mehrzahl von Leuchtanzeigen, beispielsweise LEDs, wobei unter jeder Aufnahmekammer eine derartige Leuchtanzeige 15 angeordnet ist. Die Böden der Aufnahmekammern 13 sind in diesem Fall lichtdurchlässig, so dass dem Bediener auf einfache und sichere Weise die jeweils zu befüllende Aufnahmekammer 13 durch Einschalten der zugehörigen Leuchtanzeige 15 sichtbar gemacht wird. Damit eine richtige Zuordnung der Aufnahmekammern 13 zu den Leuchtanzeigen 15 gewährleistet ist, weist der Bedienerarbeitsplatz 1 Vorrichtungen 16 zur Positionierung der aufliegenden Verpackung 12 auf.

Sobald der Greifer des Bediengeräts die Arzneimittelpakkung 10 mit den gerade einzufüllenden Arzneimittelportionen 11 an der vorgegebenen Stelle 7 abgelegt hat, erhält der Bediener 3 über die Ausgabeeinrichtung 14 von dem Computer die Anweisung, eine Arzneimittelportion 11 aus der Arzneimittelpackung zu entnehmen und diese in eine durch eine Leuchtanzeige 15 hervorgehobene Aufnahmekammer 13 einzulegen. Sobald dies erledigt ist, betätigt der Bediener 3 eine Eingabevorrichtung 17, mit der dem Computer der Abschluss des Einfüllvorgangs angezeigt wird. Es sind auch Ausführungsformen denkbar, bei denen der Benutzer 3 nicht aktiv eine Eingabevorrichtung 17 zu betätigen braucht, sondern bei denen mit Hilfe von Sensoren automatisch erfasst wird, dass der Bediener 3 die Arzneimittelportion 11 in die vorgegebene Aufnahmekammer 13 eingelegt hat. In diesem Fall stellen diese Sensoren (und zugehörige Auswerteschaltungen) die von dem Bediener betätigten Eingabeeinrichtungen im Sinne der Erfindung dar. Sobald der Bediener den Abschluss des Einlegens der Arzneimittelportion angezeigt hat, wird er entweder zum Einlegen einer weiteren Arzneimittelportion aus derselben Arzneimittelpackung 10 aufgefordert, oder er wird aufgefordert, die Arzneimittelpackung 10 von dem vorgegebenen Platz 7 zu nehmen und auf einen vorgegebenen Platz zur Wieder-Einlagerung in das automatisierte Regallager 2 aufzulegen (dieser Schritt entfällt selbstverständlich dann, wenn nach Entnahme der letzten Arzneimittelportion 11 die Arzneimittelpackung 10 leer ist). Der Bediener 3 legt beispielsweise die vom Platz 7 entnommene Arzneimittelpackung 10 auf ein in Figur 1 schematisch dargestelltes Förderband 18 in einer vorgegeben Orientierung und bündig an einer Schranke 19 anliegend auf. Die an der Schranke 19 auf dem Förderband 18 aufliegende Packung 20 wird dann nach Freigabe der Schranke 19 in Richtung des Pfeils 21 transportiert und gelangt wieder in das Arzneimittellager 2, was durch den Pfeil 4 angedeutet ist.

Bei dem in Figur 1 schematisch dargestellten Beispiel ist ein Herantransportieren von Arzneimittelpackungen zum Bediener-Arbeitsplatz 1 durch einen Greifer 6 eines Bediengeräts dargestellt, während der Abtransport einer Arzneimittelpackung 20 von dem Bediener-Arbeitsplatz 1 zu dem Arzneimittellager 2 durch ein Förderband 18 dargestellt ist. Selbstverständlich ist es auch denkbar, dass ein Bediengerät mit einem Greifer 6 sowohl den Herantransport als auch den Abtransport übernimmt. Andererseits können auch Förderbänder und andere Transporteinrichtungen für den Transport von und zu dem Bediener-Arbeitsplatz eingesetzt werden. Es braucht auch nicht jeweils nur eine Arzneimittelpackung 10 gleichzeitig zu dem Bediener-Arbeitsplatz 1 herantransportiert zu werden; vielmehr ist es auch denkbar, dass mittels einer Transporteinrichtung hintereinander mehrere aufeinanderfolgende Arzneimittelpackungen herantransportiert werden, wobei jeweils die nachfolgend herantransportierten Packungen noch nicht für den Bediener 3 zugreifbar sind, um Verwechslungen zu minimieren. Beispielsweise wird jeweils eine Packung 10 an einer vorgegebenen Stelle 7 abgelegt, während sich die nachfolgende Packung noch hinter einer Sperre oder Tür befindet, die erst freigegeben wird, wenn die vorhergehende Packung 10 von dem Bediener 3 von dem vorgegebenen Platz 7 entfernt und auf eine Transporteinrichtung für einen Rücktransport zum Arzneimittellager 2 aufgelegt worden ist. Die Transporteinrichtung, die für den Rücktransport zum Arzneimittellager 2 verantwortlich ist, kann auch einen Aufnahmepuffer derart enthalten, dass sie eine Anzahl von wieder in das Lager 2 einzulagernden Packungen 20 aufnimmt, bevor diese tatsächlich wieder eingelagert werden.

Bei dem erfindungsgemäßen Verfahren zum Bereitstellen und Lagern von Arzneimittelabgabepackungen, beispielweise Blistern, die mehrere unterschiedliche Arzneimittelportionen in einer vorgegebenen Anordnung enthalten, mit Hilfe eines von einem Computer gesteuerten automatisierten Arzneimittellagers 2 mit einer Vielzahl von Lagerplätzen für Arzneimittelpackungen und einem von dem Computer gesteuerten Bediengerät zur Ein- und Auslagerung von Arzneimittelpackungen wird wie folgt vorgegangen. Zunächst wird an dem Bediener-Arbeitsplatz 1 eine mit den Arzneimittelportionen 11 zu befüllende Verpackung 12 mit mehreren Aufnahmekammern 13 bereitgestellt. Bei alternativen Ausführungsformen können auch gleichzeitig mehrere Verpakkungen 12 an vorgegebenen Orten bereitgestellt werden. Die zu befüllende Verpackung 12 wird vorzugsweise in einer vorgegebenen Orientierung an einem vorgegebenen Platz abgelegt. Dieses Bereitstellen der zu befüllenden Verpackung 12 kann manuell durch den Bediener 3 oder automatisiert durch eine Transporteinrichtung und ein Handhabungsgerät ausgeführt werden.

Für jede Art von in die Verpackung 12 einzufüllenden Arzneimittelportionen 11 werden dann die folgenden Schritte nacheinander ausgeführt. Zunächst wird eine Arzneimittelpackung 10, die ausschließlich der jeweiligen Art entsprechende Arzneimittelportionen 11 enthält, von einer Transporteinrichtung und/oder einem Bediengerät zu dem Bediener-Arbeitsplatz 1 herantransportiert. Sie wird vorzugsweise an einer vorgegebenen Stelle abgelegt. Die Arzneimittelpackung wird von dem Bediengerät des Arzneimittellagers ausgelagert, sofern sie darin vorrätig ist. Sofern die gewünschte Arzneimittelpackung nicht in dem Arzneimittellager vorrätig ist und es sich beispielsweise um eine Verpackung handelt, die auch nicht in einem automatisierten Lager gehandhabt werden kann, kann bei einer Ausführungsform der Bediener 3 aufgefordert werden, die nicht in einem automatisierten Lager lagernde Arzneimittelpackung 10 herbeizuschaffen und an dem vorgegebenen Platz 7 aufzustellen. Dort wird die Arzneimittelpackung dann gegebenenfalls geöffnet und der Bediener wird von einer mit dem Computer gekoppelten Ausgabeeinrichtung, beispielsweise der Ausgabeeinrichtung 14, angewiesen, eine vorgegebene Anzahl von Arzneimittelportionen aus der herantransportierten Arzneimittelpackung 10 zu entnehmen und in eine vorgegebene Aufnahmekammer 13 oder nacheinander in mehrere vorgegebene Aufnahmekammern 13 einzulegen. Dabei wird dem Bediener von einer mit dem Computer gekoppelten Ausgabeeinrichtung, beispielsweise von den Leuchtanzeigen 15, jeweils ein Identifikationssignal für die zu befüllende Aufnahmekammer 13 angezeigt. Es sind Ausführungsformen denkbar, bei denen der Bediener beispielsweise aufgefordert wird, vier Arzneimittelportionen 11 aus der Arzneimittelpackung 10 zu entnehmen und bei dem dem Bediener dann gleichzeitig vier Kammern 13 angezeigt werden, die zu befüllen sind. Hier verteilt der Bediener die vier entnommenen Arzneimittelportionen 11 auf die vier hervorgehobenen Kammern 13. Bei einer sichereren Vorgehensweise fordert der Computer den Benutzer 3 auf, jeweils nur eine Arzneimittelportion 11 zu entnehmen und in eine angezeigte Kammer 13 einzufüllen, wobei der Schritt dann bei dem eben beschriebenen Beispiel viermal wiederholt wird.

Nachdem der Bediener weisungsgemäß sämtliche Arzneimittelportionen 11, die er aus der Arzneimittelpackung 10 entnommen hat, in die richtigen Aufnahmekammern 13 eingefüllt hat, zeigt er dem Computer mittels einer Eingabeeinrichtung, beispielsweise mittels einer Eingabetaste 17, an, dass das Einlegen der aus der herantransportierten Arzneimittelpackung 10 entnommenen Art von Arzneimittelportionen 11 abgeschlossen ist.

Anschließend wird die Arzneimittelpackung 10 wieder in das Arzneimittellager 2 eingelagert, wobei dies vollständig automatisch oder zum Teil unter Mitwirkung des Bedieners 3 erfolgen kann. Beispielsweise kann bei einer Ausführungsform vorgesehen sein, dass der Bediener 3 die Arzneimittelpackung 10 von dem Platz 7 entnimmt und in einer vorgegebenen Orientierung auf der Transporteinrichtung 18 vor der Schranke 19 anlegt. Für jede Art von Arzneimittelportion werden die genannten Schritte in dieser Reihenfolge ausgeführt. Der Schritt des Herantransportierens einer weiteren Art von Arzneimittelportionen in einer weiteren Arzneimittelpackung 10 wird allerdings erst abgeschlossen, das heißt der endgültige Zugriff des Bedieners 3 auf die Packung 10 erst dann gewährt, wenn der Bediener den Abschluss des Einlegens der Arzneimittelportionen der vorangegangenen Art dem Computer angezeigt hat. Damit wird eine hohe Sicherheit gegen Fehl-Befüllungen gewährleistet.

Nachdem die Schritte des Herantransportierens der Arzneimittelpackung 10 und des Befüllens der Aufnahmekammern 13 und der Betätigung der Eingabeeinrichtung 17 für sämtliche Arten einzufüllender Arzneimittelportionen abgeschlossen sind, wird die befüllte Arzneimittelabgabepackung, das heißt die befüllte Verpackung 12, verschlossen, wobei dies entweder von dem Bediener 3 oder automatisiert ausgeführt wird. Sofern die so hergestellte Arzneimittelabgabepackung, das heißt der befüllte Blister, dann noch nicht gleich, beispielsweise an einem Patienten oder Kunden, ausgegeben werden soll, wird sie ebenfalls in das Arzneimittellager 2 eingelagert. Dies geschieht grundsätzlich in der gleichen Weise, wie auch die Arzneimittelpakkung 20 wieder in das Lager 2 eingelagert wird.

## Patentansprüche

1. Verfahren zum Bereitstellen und Lagern von Arzneimittelabgabepackungen, die mehrere unterschiedliche Arzneimittelportionen in einer vorgegebenen Anordnung enthalten, mit Hilfe eines von einem Computer gesteuerten automatisierten Arzneimittellagers (2) mit einer Vielzahl von Lagerplätzen für Arzneimittelpackungen und einem von dem Computer gesteuerten Bediengerät zur Ein- und Auslagerung von Arzneimittelpackungen, wobei:
a) an einem Bediener-Arbeitsplatz (1) eine mit den Arzneimittelportionen zu befüllende Verpackung (12) mit mehreren Aufnahmekammern (13) bereitgestellt wird,
b) für jede Art von in die Verpackung einzufüllenden Arzneimittelportionen:
b1) eine Arzneimittelpackung (10), die ausschließlich der jeweiligen Art entsprechende Arzneimittelportionen (11) enthält, zu dem Bediener-Arbeitsplatz (1) herantransportiert wird, wobei die Arzneimittelpackung von dem Bediengerät aus dem Arzneimittellager (2) ausgelagert wird, sofern sie darin vorrätig ist,
b2) der Bediener (3) von einer mit dem Computer gekoppelten Ausgabeeinrichtung (14, 15) angewiesen wird, eine vorgegebene Anzahl von Arzneimittelportionen (11) aus der herantransportierten Arzneimittelpackung (10) zu entnehmen und in eine vorgegebene Aufnahmekammer (13) oder nacheinander in mehrere vorgegebene Aufnahmekammern (13) einzulegen, wobei dem Bediener von einer mit dem Computer gekoppelten Ausgabeeinrichtung (15) jeweils ein Identifikationssignal für die zu befüllende Aufnahmekammer (13) angezeigt wird,
b3) von dem Bediener der Abschluss des Einlegens der aus der herantransportierten Arzneimittelpackung entnommenen Art von Arzneimittelportionen mittels einer Eingabeeinrichtung (17) dem Computer angezeigt wird,
b4) die Arzneimittelpackung von dem Bediengerät wieder in das Arzneimittellager einlagert wird, sofern noch wenigstens eine Arzneimittelportion enthalten ist,
wobei für jede Art von Arzneimittelportionen die Schritte b1), b2), b3) und b4) in dieser Reihenfolge ausgeführt werden und wobei der Schritt b1) für eine weitere Art von in die Verpackung einzufüllenden Arzneimittelportionen erst nach dem Schritt b3) für die vorher eingefüllte Art von Arzneimittelportionen abgeschlossen wird,
c) nachdem die Schritte b1) bis b3) für jede Art einzufüllender Arzneimittelportionen abgeschlossen sind, die befüllte Arzneimittelabgabepackung verschlossen wird und mit Hilfe des Bediengeräts in das Arzneimittellager einlagert wird, sofern die Arzneimittelabgabepackung noch nicht ausgegeben werden soll.

2. Verfahren zum Bereitstellen und Lagern von Arzneimittelabgabepackungen nach Anspruch 1, **dadurch gekennzeichnet, dass** die Arzneimittelpackungen und die nach dem Befüllen eingelagerten Arzneimittelabgabepackungen in dem Arzneimittellager chaotisch und gemischt gelagert werden.

3. Verfahren zum Bereitstellen und Lagern von Arzneimittelabgabepackungen nach Anspruch 1 oder 2, **dadurch gekennzeichnet, dass** im Schritt b1) die Arzneimittelpackung dann, wenn sie nicht im Arzneimittellager vorrätig ist, der Bediener aufgefordert wird, die Arzneimittelpackung, die ausschließlich der jeweiligen Art entsprechende Arzneimittelportionen enthält, heranzutransportieren.

4. Verfahren zum Bereitstellen und Lagern von Arzneimittelabgabepackungen nach Anspruch 1 oder 2, **dadurch gekennzeichnet, dass** im Schritt b1) die Arzneimittelpackung dann, wenn sie nicht im Arzneimittellager vorrätig ist und die Arzneimittelpackung auch dort nicht eingelagert werden kann, der Bediener aufgefordert wird, die Arzneimittelpackung, die ausschließlich der jeweiligen Art entsprechende Arzneimittelportionen enthält, heranzutransportieren, wobei die Arzneimittelpackung im Schritt b4) von dem Bediener wieder zurücktransportiert wird, sofern noch wenigstens eine Arzneimittelportion enthalten ist.

5. Verfahren zum Bereitstellen und Lagern von Arzneimittelabgabepackungen nach einem der Ansprüche 1 bis 4, **dadurch gekennzeichnet, dass** als Identifikationssignal eine die jeweilige Aufnahmekammer kennzeichnende akustische und/oder optische Anzeige ausgegeben wird.

6. Verfahren zum Bereitstellen und Lagern von Arzneimittelabgabepackungen nach einem der Ansprüche 1 bis 4, **dadurch gekennzeichnet, dass** im Schritt a) an dem Bediener-Arbeitsplatz eine Verpackung mit mehreren nebeneinander angeordneten Aufnahmekammern in einer vorgegebenen räumlichen Orientierung bereitgestellt und gehalten wird.

7. Verfahren zum Bereitstellen und Lagern von Arzneimittelabgabepackungen nach Anspruch 6, **dadurch gekennzeichnet, dass** als Identifikationssignal eine der jeweiligen Aufnahmekammer räumlich zugeordnete optische Anzeige ausgegeben wird.

8. Verfahren zum Bereitstellen und Lagern von Arzneimittelabgabepackungen nach Anspruch 6, **dadurch gekennzeichnet, dass** als Identifikationssignal eine die jeweilige Aufnahmekammer optisch hervorhebende Anzeige ausgegeben wird.

9. Verfahren zum Bereitstellen und Lagern von Arzneimittelabgabepackungen nach Anspruch 8, **dadurch gekennzeichnet, dass** die die jeweilige Aufnahmekammer optisch hervorhebende Anzeige eine unter oder neben der jeweiligen Aufnahmekammer angeordnete optische Anzeige ist.

10. Verfahren nach einem der Ansprüche 1 bis 9, **dadurch gekennzeichnet, dass** der Schritt b4) des Wieder-Einlagerns der Arzneimittelpackung für jede Art von Arzneimittelportionen ausgeführt wird, bevor der Schritt b1) des Herantransportierens für eine nächste Art von Arzneimittelportionen ausgeführt wird.

11. Verfahren nach einem der Ansprüche 1 bis 9, **dadurch gekennzeichnet, dass** der Schritt b4) des Wieder-Einlagerns der Arzneimittelpackung unabhängig von den Schritten b1) des Herantransportierens der nachfolgenden Arzneimittelpackungen und vor oder nach dem Schritt c) des Ausgebens oder Einlagerns der Arzneimittelabgabepackung ausgeführt wird.

12. Verfahren nach einem der Ansprüche 1 bis 11, **dadurch gekennzeichnet, dass** der Schritt b1) des Herantransportierens einer nachfolgenden Arzneimittelpackung für eine weitere Art von in die Verpackung einzufüllenden Arzneimittelportionen bereits begonnen wird, bevor im Schritt b3) von dem Bediener der Abschluss des Einlegens der aus der vorhergehenden Arzneimittelpackung entnommenen Art von Arzneimittelportionen dem Computer angezeigt wird.

13. Verfahren nach Anspruch 12, **dadurch gekennzeichnet, dass** der Schritt b1) des Herantransportierens einer nachfolgenden Arzneimittelpackung bereits begonnen wird, indem die nachfolgende Arzneimittelpackung zu einem Entnahmefach an dem Bediener-Arbeitsplatz transportiert wird, wobei der Schritt b1) des Herantransportierens der nachfolgenden Arzneimittelpackung erst nach dem Schritt b3) für die vorher eingefüllte Art von Arzneimittelportionen abgeschlossen wird, indem der Zugriff auf das Entnahmefach freigegeben wird.
